# EUROPEAN PATENT APPLICATION

(11) **EP 1 526 667 A1**
(43) Date of publication of application: **27.04.2005**
(21) Application number: 03771446.6
(22) Date of filing: 31.07.2003
(51) Int. Cl.: H04J 1/00, H04J 11/00

(54) **MULTI-CARRIER TRANSMISSION DEVICE AND MULTI-CARRIER TRANSMISSION METHOD**

(30) Priority: 31.07.2002 JP 2002223485
(71) Applicant: MATSUSHITA ELECTRIC INDUSTRIAL CO., LTD., Kadoma-shi, Osaka 571-8501 (JP)
(72) Inventor: OSAKI, Yoshiharu, Yokohama-shi, Kanagawa 240-0006 (JP); MIYA, Kazuyuki, Setagaya- Ku, Tokyo 156-0052 (JP)
(74) Representative: Grünecker, Kinkeldey, Stockmair & Schwanhäusser Anwaltssozietät
(86) International application number: PCT/JP2003/009717
(87) International publication number: WO 2004/012368

(57) **Abstract**

During the time when a mobile station of a communicating party receives a signal from another base, a synchronization control section 101 instructs stop of signal transmission to a control section 102-1, which corresponds to a system that transmits a signal with carrier frequency f1 at which a signal is received from another base station, and a control section 102-2, which corresponds to a system that transmits a signal with carrier frequency f2 adjacent to a frequency at which a signal is received from another base station. When receiving instructions to stop the transmission from the synchronization control section 101, a control sections 102-1 and 102-2 instruct switch 104-1 and a switch 104-2 to cut off a signal to be transmitted and instruct an RF analog section 107-1 and an RF analog section 107-2 to stop the signal transmission.

## Description

### Technical Field

The present invention relates to a multicarrier transmission apparatus and multicarrier transmission method, and particularly relates to a multicarrier transmission apparatus and multicarrier transmission method that are suitable for use in a communication apparatus in which a mobile station of a communicating party performs position detection.

### Background Art

In CDMA communications where a base station and a mobile station perform communications, the base station stops transmitting signals for a short period of time in order to detect a position of the mobile station. Then, while the base station stops transmitting signals, the mobile station receives a signal (pilot channel) transmitted from a nearby base station and measures the distance between the mobile station and this base station from the level of the received signal.

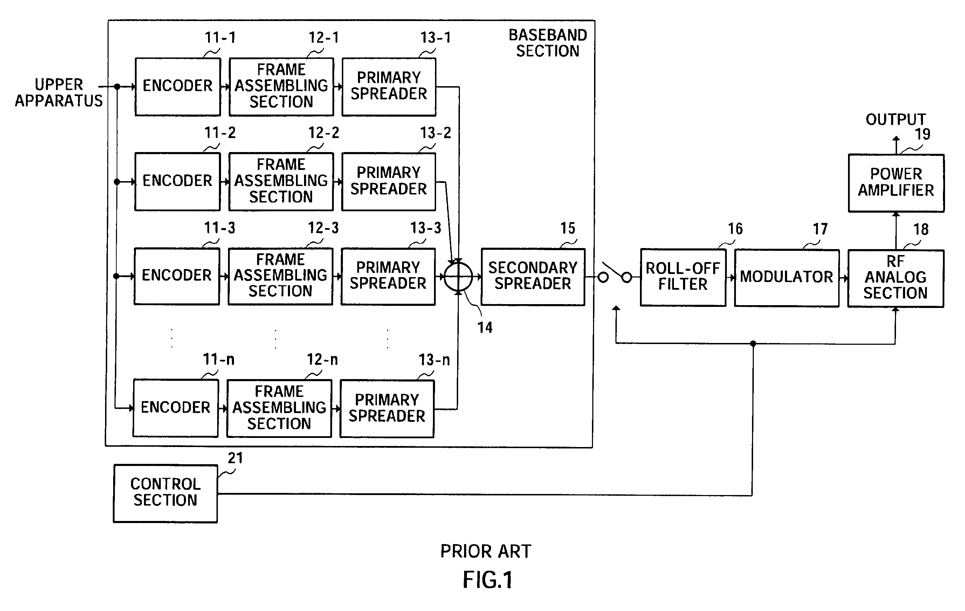

FIG. 1 is a block diagram illustrating a configuration of a conventional transmission apparatus. Encoders 11-1 to 11-n code transmission data sent from an upper apparatus, and output the coded transmission data to frame assembling sections 12-1 to 12-n. The frame assembling sections 12-1 to 12-n divide transmission data in a frame unit and output the transmission data to first spreaders 13-1 to 13-n.

The first spreaders 13-1 to 13-n multiply transmission data by a spreading code and output the spread transmission signals to an adder 14. The adder 14 adds the transmission signals to output to a second spreader 15. The second spreader 15 multiplies the transmission signal by a spreading code to output to a roll-off filter 16.

These encoders 11-1 to 11-n, frame assembling sections 12-1 to 12-n, first spreaders 13-1 to 13-n, adder 14, and second spreader 15 form a baseband section 20 to perform processing with a baseband frequency. Then, the roll-off filter 16 suppresses the frequency component of the transmission signal outside a predetermined bandwidth, and outputs the suppressed transmission signal to a modulator 17.

The modulator 17 modulates the transmission signal and outputs the modulated transmission signal to an RF analog section 18. The RF analog section 18 frequency-converts the transmission signal to a radio frequency, and outputs the frequency-converted transmission signal to a power amplifier 19. The power amplifier 19 amplifies power of the transmission signal and sends the amplified transmission signal.

A control section 21 controls to stop the signal transmission in order to detect the position of the mobile station. More specifically, the control section 21 cuts off the transmission signal output to the roll-off filter 16 from the second spreader 15 to stop the transmission signal from being output from an RF analog section 18. In this way, the base station stops the transmission of the signal for a short period of time, and the mobile station receives the signal transmitted from another base station during this time.

Generally, in order that the mobile station in the vicinity of the base station in communication receives a pilot channel signal from a second base station to measure a distance from the second base station, it is necessary to stop transmission from the base station in communication and suppress transmission power from the level at the time of signal transmission by 45 dB or more.

In a case where the above-explained operation in which the base station stops the transmission of the signal for a short period of time to detect the position of the mobile station is applied to multicarrier transmission, power leak from an adjacent carrier occurs.

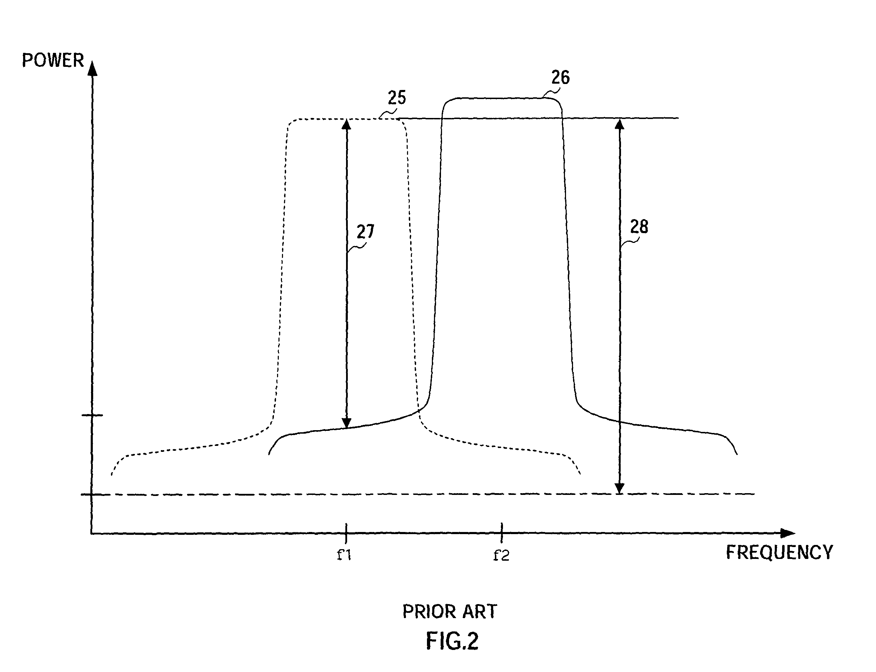

FIG. 2 is a view illustrating one example of power spectrum distributions as transmitted from the conventional multicarrier transmission apparatus. In FIG. 2, the vertical axis indicates power and the horizontal axis indicates a frequency. A distribution 25 shows a power spectrum distribution of a signal transmitted with carrier frequency f1 and a distribution 26 shows a power spectrum distribution of a signal transmitted with carrier frequency f2.

When only the signal transmitted with the carrier frequency f1 is stopped, the power of f1 in distribution 26 becomes leakage power. Due to this leakage power, the power suppression width at the carrier frequency f1 becomes as shown by 27. The power suppression width 27 is smaller than a power suppression width 28 obtained when no leakage power occurs.

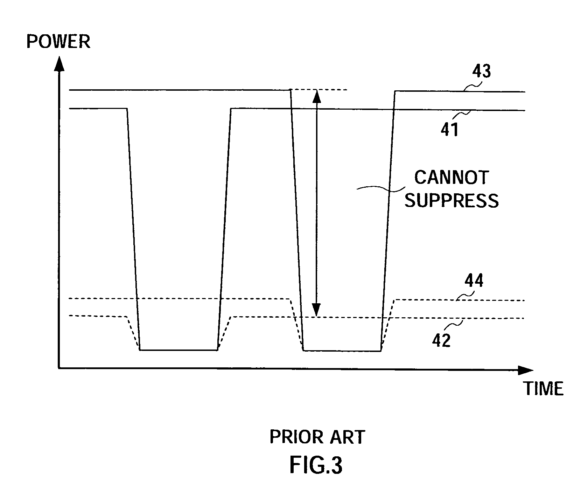

FIG. 3 is a view illustrating an example of a signal transmission timing of the conventional multicarrier transmission apparatus. In FIG. 3, the vertical axis indicates power and the horizontal axis indicates time.

In FIG. 3, 41 denotes power of a signal at frequency f1 transmitted with carrier frequency f1, and 42 denotes leakage power of a signal at frequency f2 transmitted with the carrier frequency f1. Moreover, 43 denotes power at the frequency f2 of the signal transmitted with the carrier frequency f2, and 44 denotes leakage power at the frequency f1 of the signal transmitted with the carrier frequency f2.

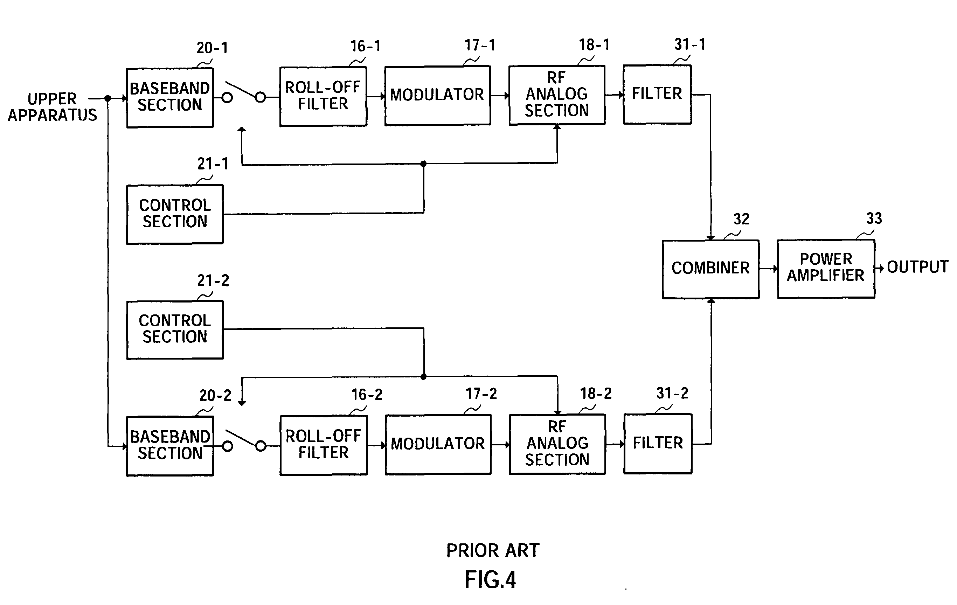

As a method for preventing this power leak, the multicarrier transmission apparatus of FIG. 4 canbe considered. FIG. 4 is a block diagram illustrating a configuration of a conventional communication apparatus. The communication apparatus of FIG. 4 is an apparatus that performs communications using a plurality of carriers. In FIG. 4, baseband sections 20-1 and 20-2 perform the same operation as by the baseband section 20 of FIG. 1. Similarly, roll-off filters 16-1 and 16-2 correspond to the roll-off filter 16, modulators 17-1 and 17-2 correspond to the modulator 17, RF analog sections 18-1 and 18-2 correspond to the RF analog section 18, and control sections 21-1 and 21-2 correspond to the control section 21.

The RF analog section 18-1 frequency-converts a transmission signal to a radio frequency and outputs the frequency-converted transmission signal to a filter 31-1. The RF analog section 18-2 frequency-converts a transmission signal to a radio frequency different from the RF analog section 18-1 and outputs the frequency-converted transmission signal to a filter 31-2.

The filters 31-1 and 31-2 attenuate the signals in the lower frequency area and the higher frequency area outside the required bandwidth with the carrier frequency in the center, , and output them to a combiner 32. The combiner 32 combines the transmission signals output from the filers 31-1 and 31-2 and outputs it to a power amplifier 33. The power amplifier 33 amplifies power of the transmission signal and transmits the amplified transmission signal.

However, in the conventional apparatus, there is a problem in which distortion occurs when power amplification is performed after combining the signals of the respective carriers and even if the base station stops signal transmission, the adjacent carrier is transmitted, so that leakage power to be caused cannot be sufficiently suppressed.

Moreover, in a method in which power is amplified for each carrier and passed through a filter, there is a problem in which a high power filter cannot sufficiently suppress the signals outside the band.

### Disclosure of Invention

An object of the present invention is to provide a multicarrier transmission apparatus and multicarrier transmission method capable of suppressing transmission power after combining carriers at which power of a transmission signal is stopped in a multicarrier transmission.

In a case where a mobile station of a communicating party receives a signal from another base station using a carrier used in communications, signal transmission of a carrier within a predetermined band width from the carrier frequency is stopped, thereby attaining this object.

### Brief Description of Drawings

FIG. 1 is a block diagram illustrating a configuration of a conventional transmission apparatus;
FIG. 2 is a view illustrating one example of power spectrum distributions as transmitted from a conventional multicarrier transmission apparatus;
FIG. 3 is a view illustrating an example of a signal transmission timing of a conventional multicarrier transmission apparatus;
FIG. 4 is a block diagram illustrating a configuration of a conventional multicarrier transmission apparatus;
FIG. 5 is a block diagram illustrating a configuration of a multicarrier transmission apparatus according to Embodiment 1 of the present invention;
FIG. 6 is a view illustrating an example of a signal transmission timing of a multicarrier transmission apparatus according to an embodiment of the present invention;
FIG. 7 is a view illustrating an example of power spectrum distributions as transmitted from a multicarrier transmission apparatus according to an embodiment of the present invention;
FIG. 8 is a view illustrating a signal transmission timing of a multicarrier transmission apparatus; and
FIG. 9 is a view illustrating a signal transmission timing of a multicarrier transmission apparatus.

### Best Mode for Carrying Out the Invention

An embodiment of the present invention will be explained with reference to the drawings.

### (Embodiment 1)

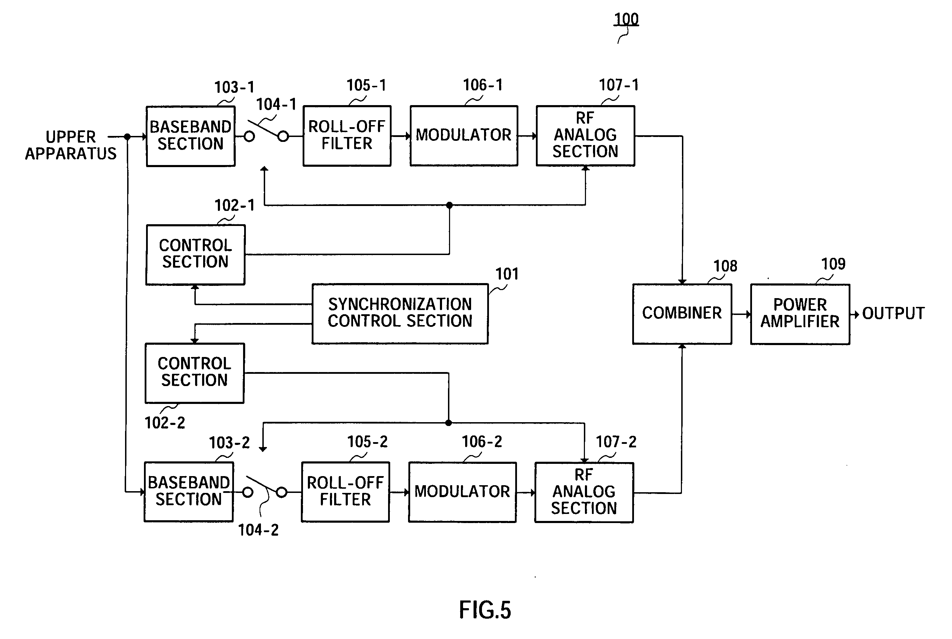

FIG. 5 is a block diagram illustrating a configuration of a multicarrier transmission apparatus according to Embodiment 1 of the present invention. A multicarrier transmission apparatus 100 of FIG. 5 mainly includes a synchronization control section 101, a control section 102-1, a control section 102-2, a baseband section 103-1, a baseband section 103-2, a switch 104-1, a switch 104-2, a roll-off filter 105-1, a roll-off filter 105-2, a modulator 106-1, a modulator 106-2, an RF analog section 107-1, an RF analog section 107-2, a combiner 108, and a power amplifier 109.

In addition, it is assumed that a base station is configured using the multicarrier transmission apparatus of the present invention and a mobile station communicates with this base station.

The following will explain an example in which the RF analog section 107-1 transmits a signal with a frequency at which the mobile station receives a signal from another base station and the RF analog section 107-2 transmits a signal with a frequency at which the mobile station receives a signal from another base station.

During the time when the mobile station of a communicating party receives a signal from another base station, the synchronization control section 101 instructs to stop signal transmission to the control section 102-1, which corresponds to a system that transmits a signal with carrier frequency f1 at which a signal is received from another base station, and the control section 102-2, which corresponds to a system that transmits a signal with carrier frequency f2 adjacent to the frequency at which a signal is received from another base station.

Here, the time when the mobile station of the communicating party receives signals from another base station means time when the mobile station of the communicating party of the multicarrier transmission apparatus 100 receives signals from another communicating party than the multicarrier transmission apparatus 100.

For example, in a forward link of CDMA (Code Division Multiple Access) mobile communications, in order to detect a position of the mobile station, a transmission wave of the base station (in this case, multicarrier transmission apparatus 100) is stopped for a short period of time, and during this period the mobile station detects a pilot channel of a nearby base station and measures the distance from this base station based on the received level. During this short period of time when the transmission wave is stopped, the mobile station receives the signal from another base station.

When receiving instructions to stop the transmission from the synchronization control section 101, the control section 102-1 instructs the switch 104-1 to cut off a path for output from the baseband section 103-1 to the roll-off filter 105-1 and instructs the RF analog section 107-1 to stop the signal transmission.

Similarly, when receiving instructions to stop the transmission from the synchronization control section 101, the control section 102-2 instructs the switch 104-2 to cut off a path for output from the baseband section 103-2 to the roll-off filter 105-2 and instructs the RF analog section 107-2 to stop the signal transmission.

The baseband section 103-1 codes and modulates a transmission signal output from an upper apparatus, and outputs the obtained transmission signal to the switch 104-1. Similarly, the baseband section 103-2 codes and modulates a transmission signal output from the upper apparatus, and outputs the obtained transmission signal to the switch 104-2.

The switch 104-1 outputs the transmission signal output from the baseband section 103-1 to the roll-off filter 105-1. Then, when cut-off instructions are output from the control section 102-1, the transmission signal output from the baseband section 103-1 is not output to the roll-off filter 105-1.

The switch 104-2 outputs the transmission signal output from the baseband section 103-2 to the roll-off filter 105-2. Then, when cut-off instructions are output from the control section 102-2, the transmission signal output from the baseband section 103-2 is not output to the roll-off filter 105-2.

The roll-off filter 105-1 suppresses the frequency component of the transmission signal outside a predetermined bandwidth, and outputs the suppressed transmission signal to the modulator 106-1. The roll-off filter 105-2 suppresses the frequency component of the transmission signal outside a predetermined bandwidth, and outputs the suppressed transmission signal to the modulator 106-2.

The modulator 106-1 modulates the transmission signal and outputs the modulated transmission signal to the RF analog section 107-1. The modulator 106-2 modulates the transmission signal and outputs the modulated transmission signal to the RF analog section 107-2.

The RF analog section 107-1 multiplies the transmission signal by a first local signal and frequency-converts it to a radio frequency f1, and outputs the frequency-converted transmission signal to the combiner 108. The RF analog section 107-2 multiplies the transmission signal by a second local signal and frequency-converts it to a radio frequency f2, and outputs the frequency-converted transmission signal to the combiner 108.

The combiner 108 combines the transmission signals output from the RF analog section 107-1 and the analog section 107-2 and outputs the combined signal to the power amplifier 109. The power amplifier 109 amplifies power of the transmission signal and transmits the amplified transmission signal.

By the above configuration, the multicarrier transmission apparatus 100 stops transmitting the signal with the carrier in the predetermined bandwidth from the carrier frequency at which the communicating party receives the signal from another base station.

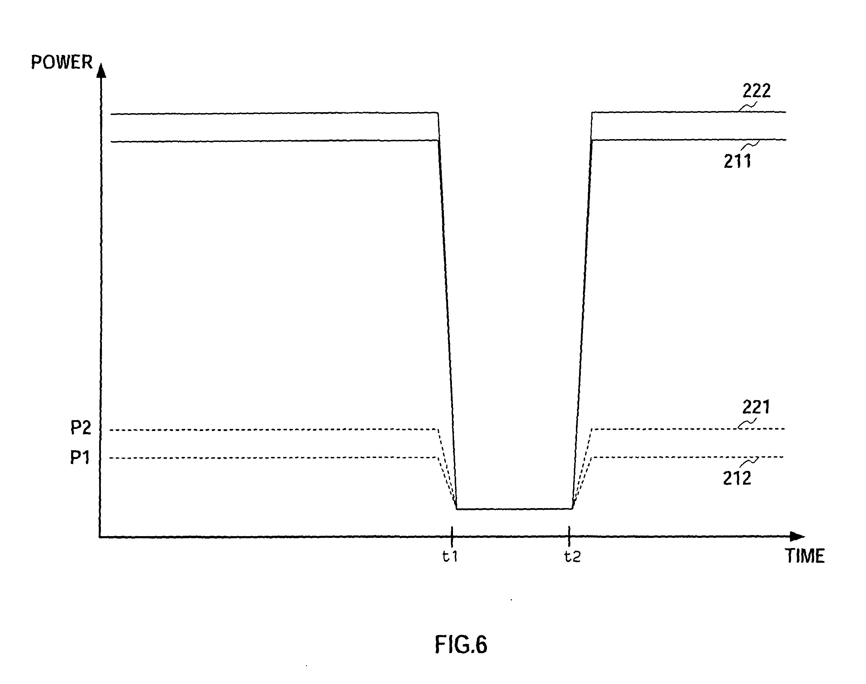

Next, an explanation will be given of timing of the multicarrier transmission apparatus 100. FIG. 6 is a view illustrating an example of a signal transmission timing of the multicarrier transmission apparatus according to this embodiment.

In FIG. 6, the vertical axis indicates power and the horizontal axis indicates time. In FIG. 6, 211 denotes power of a signal at frequency f1 transmitted with carrier frequency f1, and 212 denotes leakage power at a frequency f2 of the signal transmitted with the carrier frequency f1.

Moreover, in FIG. 6, 222 denotes power at the frequency f2 of the signal transmitted with the carrier frequency f2, and 221 denotes leakage power with the frequency f1 of the signal transmitted with the carrier frequency f2.

When the mobile station of the communicating party of the base station using this multicarrier transmission apparatus receives a signal from another base station during the time between t1 and t2, the multicarrier transmission apparatus 100 stops transmitting a carrier of the frequency f1, which the communicating party receives during the time between t1 and t2, and a signal of the frequency f2 by which power is leaked to the frequency f1.

The transmission of the signal is stopped at the carrier frequencies f1 and f2, so that power of the signal that the multicarrier transmission apparatus 100 transmits with the frequency f1 becomes P1. When the transmission of the signal is not stopped from the carrier frequency f2, power of signal that the multicarrier transmission apparatus 100 transmits with the frequency f1 becomes P2.

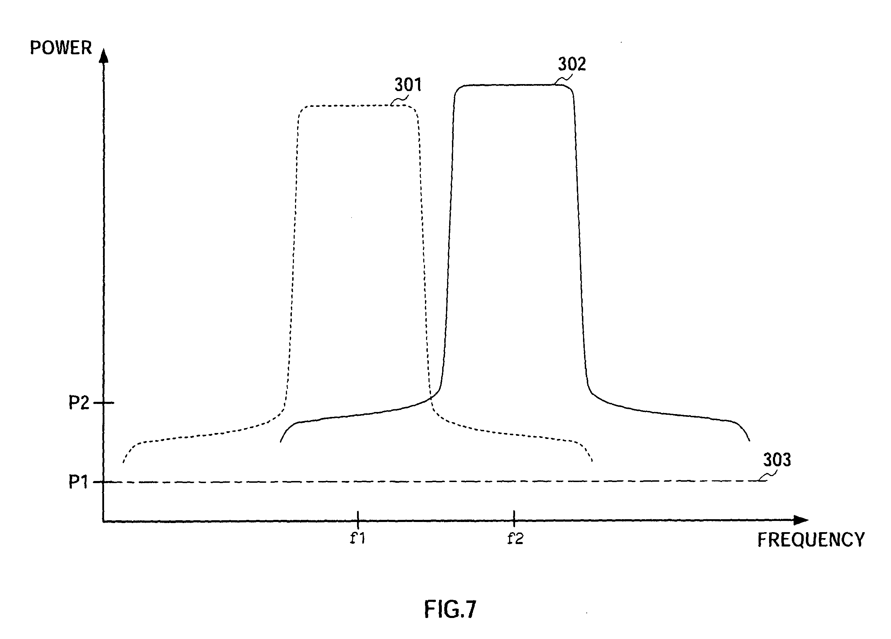

FIG. 7 is a view illustrating an example of power spectrum distributions as transmitted from the multicarrier transmission apparatus according to this embodiment. In FIG. 7, the vertical axis indicates power and the horizontal axis indicates a frequency. In FIG. 7, a distribution 301 shows a power spectrum distribution when a signal is transmitted with carrier frequency f1, and a distribution 302 shows a power spectrum distribution when a signal is transmitted with carrier frequency f2. Moreover, a distribution 303 shows a power spectrum distribution when a signal is not transmitted with the carrier frequencies f1 and f2.

When the transmission of the signal is stopped at only the carrier frequency f1, leakage power of the signal transmitted with the frequency f2 occurs at the carrier frequency f1. Namely, as illustrated in FIG. 7, a power value P2 at the frequency f1 of the power spectrum distribution 302 occurs as leakage power.

On the other hand, the multicarrier transmission apparatus 100 of the present invention stops transmitting a carrier of the frequency f1, which the communicating party receives during the time between t1 and t2, and a signal of the carrier frequency f2 from which power leaks to the frequency f1, thereby making it possible to suppress occurrence of leakage power and obtain a power value P1 at f1 of the distribution 303.

In this way, according to the multicarrier transmission apparatus of this embodiment, during the time the mobile station of the communicating party of the base station using this multicarrier transmission apparatus of the present invention receives signals from another base station using the carrier used in communications, the transmission of the signals of the carriers for the multicarrier transmission apparatus within a predetermined bandwidth from the carrier frequency is stopped, so that it is possible to prevent power leak from other carrier signals on the carrier frequency and obtain a required amount of suppression to transmission power after combining the carriers at the carrier frequency by which power of transmission signal is stopped. Moreover, there is no need to use a filter, which has a high allowable power and largely suppresses signals outside a desired band, or a power amplifier with a low distortion in frequency, thereby enabling to suppress transmission power after combining the carriers at the carrier frequency by which power of transmission signal is stopped.

In addition, in a case where the present invention is applied to a CDMA communication system, this can be achieved by multiplying a signal to be transmitted in the baseband by a spreading code.

Furthermore, though the roll filter is used in the above explanation, any filter can be applied if it is a filter that limits a frequency component outside the desired band.

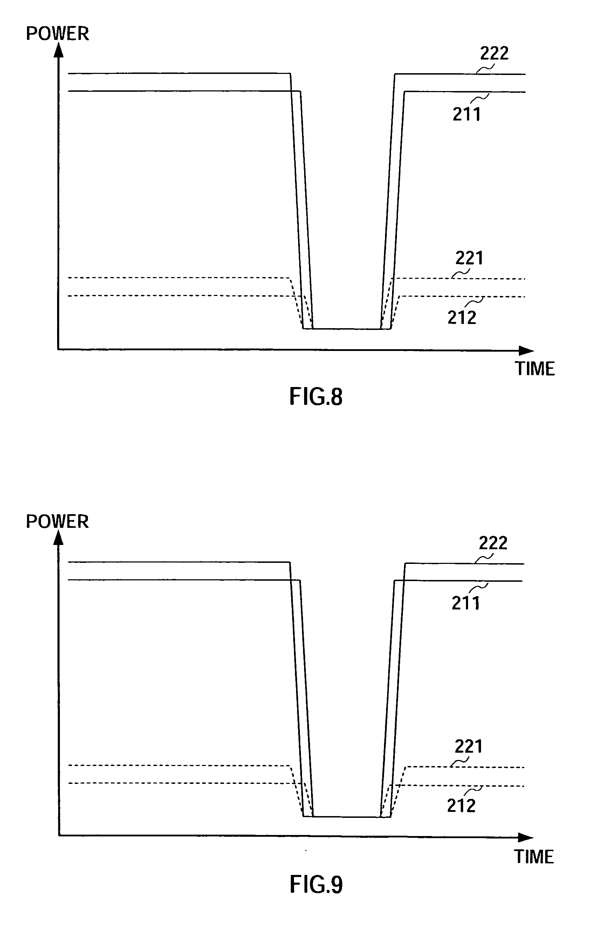

Still moreover, though the times at which transmissions of the signals of the respective carriers are stopped are agreed with each other, instead of limiting to this, transmission stop time and transmission restart time may be set before or after time when the mobile stationof each communicating party receives a signal from another base station as illustrated in FIG. 8 and FIG. 9.

In FIG. 8 and FIG. 9, 211 denotes power of a signal at frequency f1 transmitted with carrier frequency f1, and 212 denotes leakage power of a signal at frequency f2 transmitted with the carrier frequency f1. Moreover, in FIG. 8 and FIG. 9, 222 denotes power at the frequency f2 of the signal transmitted with the carrier frequency f2, and 221 denotes leakage power at the frequency f1 of the signal transmitted with the carrier frequency f2.

For example, in FIG. 8, after stopping the signal transmission of the carrier frequency f2, the signal transmission of the carrier frequency f1 is stopped. Then, after restarting the signal transmission of the carrier frequency f2, the signal transmission of the carrier frequency f1 is restarted. Moreover, for example, in FIG. 9, after stopping the signal transmission of the carrier frequency f2, the signal transmission of the carrier frequency f1 is stopped. Then, after restarting the signal transmission of the carrier frequency f1, the signal transmission of the carrier frequency f2 is restarted.

In this case, as transmission off time between the last transmission stop time and the first transmission restart time, minimum time required for which the mobile station of the communicating party receives a signal from another base station may be ensured.

Furthermore, during the time when the mobile station of the communicating party of the base station stops transmitting the carrier used in communications and the signal of the carrier of the multicarrier transmission apparatus in the predetermined bandwidth from the carrier frequency, the mobile station in the vicinity of the base station in communication can receive a pilot channel signal of a second base station with a different carrier frequency and measure a distance from the second base station.

As is obvious from the above explanation, according to the multicarrier transmission apparatus and multicarrier transmission method of the present invention, when the mobile station of the communicating party of the base station using the multicarrier transmission apparatus and multicarrier transmission method of the present invention receives the signal from another base station using the carrier used in communications, the signal transmission of the carrier in the predetermined bandwidth from the carrier frequency is stopped, thereby making possible to prevent occurrence of leakage power from the signal of another carrier on the carrier frequency and obtain the required amount of suppression to transmission power after combining the carriers at the carrier frequency by which power of transmission signal is stopped.

Moreover, when transmission stop time and transmission restart time are not made to match, stop and restart of transmission are performed for each carrier to make it possible to reduce variations in transmission power per unit time, so that constant gain control and control of distortion compensation (suppression), which are performed by the power amplifier and the like, can be stably operated.

This application is based on Japanese Patent Application No. 2002-223485 filed on July 31, 2002, entire content of which is expressly incorporated by reference herein.

### Industrial Applicability

The present invention is suitable for use in a radio communication apparatus, a base station, and a communication terminal apparatus that perform multicarrier communications.

## Claims

1. A multicarrier transmission apparatus comprising:
an instruction section that, when a communicating party station receives a signal from a remote station on a carrier frequency, said carrier frequency being used for transmission to said communicating party station, issues an instruction to stop transmission by said carrier frequency and signals within a predetermined bandwidth of said carrier frequency; and
a transmission section that transmits a signal using a plurality of different carrier frequencies and stops signal transmission according to the instruction from said instruction section.

2. The multicarrier transmission apparatus according to claim 1, wherein said instruction section includes:
a first control section that controls signal transmission corresponding to the carrier frequency for communication with the communicating party station;
a second control section that controls signal transmission corresponding to another carrier frequency within a predetermined bandwidth of the carrier frequency; and
a third control section that issues the instruction to stop the signal transmission at a same timing as a signal transmission timing controlled by said first control section and a signal transmission timing controlled by said second control section.

3. The multicarrier transmission apparatus according to claim 1, wherein said instruction section includes:
a first control section that controls signal transmission corresponding to the carrier frequency for communication with the communicating party station;
a second control section that controls signal transmission corresponding to another carrier frequency within a predetermined bandwidth of said carrier frequency; and
a third control section that instructs said first control section to stop transmission and thereafter instructs said second control section to stop transmission, and, after a predetermined period of time passes, instructs said first control section to restart the transmission and thereafter instructs said second control section to restart the transmission.

4. The multicarrier transmission apparatus according to claim 1, wherein said instruction section includes:
a first control section that controls signal transmission corresponding to the carrier frequency for communication with the communicating party station;
a second control section that controls signal transmission corresponding to another carrier frequency within a predetermined bandwidth of said carrier frequency; and
a third control section that instructs said first control section to stop transmission and thereafter instructs said second control section to stop transmission, and, after a predetermined period of time passes, instructs said second control section to restart the transmission and thereafter instructs said first control section to restart the transmission.

5. A base station apparatus having the multicarrier transmission apparatus of claim 1.

6. A mobile communication system comprising:
a base station apparatus having the multicarrier transmission apparatus of claim 1; and
a mobile station apparatus that, when a carrier corresponding to a communicating base station apparatus is not in operation, receives a carrier corresponding to a different base station apparatus from said communicating base station apparatus.

7. A multicarrier transmission method comprising the steps of:
when a communicating party station receives a signal from a remote station on a carrier frequency, said carrier frequency being used for transmission to said communicating party station, issuing an instruction to stop transmission by said carrier frequency and signals within a predetermined bandwidth of said carrier frequency; and
transmitting a signal using a plurality of different carrier frequencies and stopping signal transmission according to the instruction.
